# EUROPÄISCHE PATENTSCHRIFT

(11) **EP 1 173 819 B1**
(45) Veröffentlichungstag und Bekanntmachung des Hinweises auf die Patenterteilung: **02.01.2003**
(21) Anmeldenummer: 00913947.8
(22) Anmeldetag: 22.03.2000
(51) Int. Cl.: G06F 17/60, B65G 1/137

(54) **LAGER ZUM BEREITSTELLEN VON ARTIKELN UNTERSCHIEDLICHER ART**
STORAGE FACILITY FOR MAKING AVAILABLE DIFFERENT TYPES OF ARTICLES
DISPOSITIF DE STOCKAGE POUR METTRE A DISPOSITION DIFFERENTS TYPES D'ARTICLES

(30) Priorität: 28.04.1999 AT 75199
(43) Veröffentlichungstag der Anmeldung: 23.01.2002
(73) Patentinhaber: Schachermayer Grosshandelsgesellschaft MBH, 4020 Linz (AT)
(72) Erfinder: HOCH, Adolf, A-4040 Linz (AT); TOBISCH, Herbert, A-4040 Linz (AT)
(74) Vertreter: Hübscher, Helmut, Dipl.-Ing.
(86) Internationale Anmeldenummer: AT0000066
(87) Internationale Veröffentlichungsnummer: WO00067166

(56) Entgegenhaltungen:
- EP-A- 0 621 216
- WO-A-97/14104
- US-A- 4 974 166
- US-A- 5 781 443

## Beschreibung

### Technisches Gebiet

Die Erfindung bezieht sich auf ein Lager zum Bereitstellen von Artikeln unterschiedlicher Art, bestehend aus Lagerstellen für je eine Artikelart, aus den Lagerstellen zugeordneten Mengenerfassungseinrichtungen für die Artikel und aus einer mit den Lagerstellen über eine Übertragungsstrecke zur Übertragung der Meßergebnisse der Mengenerfassungseinrichtungen verbundenen Auswertestufe für die auf abgespeicherte Daten der jeweiligen Artikelart beziehbaren Meßergebnisse.

### Stand der Technik

Um die Vorratsmenge von Artikeln unterschiedlicher Art in einem Lager vorteilhaft überwachen zu können, ist es bekannt (DE 31 15 191 A1), den Lagerstellen für die einzelnen Artikelarten Mengenerfassungseinrichtungen zuzuordnen und die Meßergebnisse dieser Mengenerfassungseinrichtungen zusammen mit einer Ortskennung für die Lagerstellen über eine Übertragungsleitung einer Auswertestufe, vorzugsweise einem Rechner, zuzuführen. Unter der Voraussetzung, daß jede Lagerstelle lediglich eine vorgegebene Artikelart aufnimmt, kann über die Ortskennung dem Meßergebnis der zugehörigen Mengenerfassungseinrichtung die jeweilige Artikelart eindeutig zugeordnet werden, so daß beispielsweise aus dem über die Mengenerfassungseinrichtungen ermittelten Gesamtgewicht einer Artikelart die gelagerte Vorratsmenge dieser Artikelart aufgrund des bekannten Einzelgewichtes des Artikels laufend bestimmt und überwacht werden kann, was die Bewirtschaftung eines solchen Lagers erheblich vereinfacht. Nachteilig bei Lagern dieser Art ist jedoch, daß die Aufteilung der Artikelarten auf die einzelnen Lagerstellen unveränderbar vorgegeben werden muß. Dies fällt insbesondere für den Fall ins Gewicht, daß die Lagerbewirtschaftung unabhängig vom Lagerbenützer durchgeführt werden soll, weil dem Lagerbenützer eine bestimmte Aufteilung der einzelnen Artikelarten auf die vorhandenen Lagerstellen aufgezwungen wird.

Zur Erfassung der auf die einzelnen Artikelarten bezogenen Vorratsmenge der Artikel ist es darüber hinaus bekannt (DE 196 51 464 A1), die Artikel artenweise in Behältern zu lagern, die einen Speicher für eine Artikelkennung sowie für die aufgenommene Artikelmenge aufweisen. Da die Artikelmenge in einem Behälter mit Hilfe einer von den Lagerstellen für die Behälter getrennten Waage bestimmt wird, der eine Schreib- und Leseeinrichtung für die Datenspeicher der Behälter zugeordnet ist, können über eine solche Mengenerfassungseinrichtung die Mengen unterschiedlicher Artikel angegeben werden. Über die jeweils ausgelesene Artikelkennung stehen ja für die artikelbezogene Auswertung des gemessenen Gewichtes die jeweils erforderlichen Daten zur Verfügung. Es können somit die über die Waage erfaßten neuen Daten bezüglich der Menge der jeweiligen Artikelart des gewogenen Behälters wieder in den Datenspeicher eingelesen werden, um diese Daten bei Bedarf zusammen mit der Artikelkennung abrufen zu können. Damit ist wiederum eine Vorratserfassung aller Artikel in den Behältern möglich, allerdings lediglich aufgrund der beim Wiegen der Behälter außerhalb ihrer Lagerstelle ermittelten Meßwerte, so daß Änderungen der Artikelmengen beispielsweise durch eine Artikelentnahme aus den an den Lagerstellen abgestellten Behältern nicht erfaßt werden können. Abgesehen davon, daß ein Lagerbenützer gehalten ist, die Behälter bei einer Ein- oder Auslagerung der Artikel aus der Lagerstelle zu entfernen und der Mengenerfassungseinrichtung zuzuführen, ergibt sich ein weiterer Nachteil dadurch, daß die Lage der Behälter nicht abgefragt werden kann, was nicht nur die Benützung, sondern auch die Bewirtschaftung des Lagers erheblich erschweren kann.

### Darstellung der Erfindung

Der Erfindung liegt somit die Aufgabe zugrunde, für ein Lager der eingangs geschilderten Art jene Voraussetzungen zu schaffen, die eine vorteilhafte, vom Lagerbenützer unabhängige Bewirtschaftung des Lagers über die erfaßten Vorratsmengen der gelagerten Artikel ermöglichen.

Die Erfindung löst die gestellte Aufgabe dadurch, daß für jede Artikelart wenigstens ein von den Lagerstellen aufnehmbarer Behälter vorgesehen ist, daß die einzelnen Behälter zu den von ihnen aufgenommenen Artikelarten zugeordnet sind, daß jeder Behälter einen Speicher für eine Behälterkennung trägt, daß die Behälterkennung der von den Lagerstellen aufgenommenen Behälter über eine an die Übertragungsstrecke angeschlossene Leseeinrichtung auslesbar ist und daß die Auswertestufe mit einer Anzeigeeinrichtung für Behälter mit ausgewählter Behälterkennung in Verbindung steht.

Zufolge dieser Maßnahmen können die Lagerstellen wahlweise Behälter für Artikel unterschiedlicher Art aufnehmen, ohne die jederzeit mögliche, genaue Mengenerfassung der einzelnen Artikelarten zu gefährden. Aufgrund der jeder Lagerstelle zugeordneten, an die Übertragungsstrecke angeschlossenen Leseeinrichtung für die Behälterkennung kann ja jeder von einer Lagerstelle aufgenommene Behälter eindeutig erfaßt werden, was bei einer bekannten Zuordnung der einzelnen Behälter zu den einzelnen Artikelarten eine vollständige Ermittlung der Vorratsmengen aller Artikelarten in den von den Lagerstellen aufgenommenen Behältern erlaubt, obwohl die Lagerstellen für die Behälter frei gewählt werden können. Damit kann eine wesentliche Anforderung zur weitgehenden Anpassung eines Lagers an die jeweiligen Bedürfnisse des Lagerbenützers erfüllt werden, wenn zusätzlich die Lagerstellen der einzelnen Behälter abgefragt werden können. Zu diesem Zweck ist die Auswertestufe mit einer Anzeigeeinrichtung für Behälter ausgewählter Behälterkennung verbunden, so daß die Lagerstelle jedes Behälters über diese Anzeigeeinrichtung abgefragt werden kann. Die Anzeigeeinrichtung kann sehr unterschiedlich ausgeführt sein, weil es nur darum geht, eine eindeutige Zuordnung zwischen den Behältern und den sie aufnehmenden Lagerstellen zu schaffen. Eine an sich bekannte Ausführungsmöglichkeit besteht darin, jede Lagerstelle mit einer Ortskennung zu versehen, die zusammen mit der Behälterkennung über die Auswerteschaltung abgerufen werden kann, um den Lagerort jedes Behälters in geeigneter Weise angeben zu können. Eine andere Möglichkeit zur Erfassung des Lagerortes der einzelnen Behälter wird beispielsweise durch den Einsatz von Koordinatengebern für die Behälter oder Lagerstellen erhalten, wobei die jeweiligen Lagekoordinaten über Funk ermittelt werden können. Die Ermittlung der Ortskoordinaten des Lagerortes, die bei vorgegebenen Lagekoordinaten der Lagerstellen auch über eine Ortskennung zur Verfügung stehen, bringt den Vorteil mit sich, daß diese Lagekoordinaten nicht nur zur Anzeige der einzelnen Behälter, sondern beispielsweise auch zum Festlegen einer bestimmten Reihenfolge der Ein- und Auslagerung unterschiedlicher Artikel von räumlich getrennt gelagerten Behältern herangezogen werden können.

Die Koordinatenerfassung der Lagerstellen ist jedoch nicht zwingend erforderlich. So kann die Anzeigeeinrichtung für Behälter mit ausgewählter Behälterkennung aus einer Lichtquelle am Behälter selbst bestehen, die über die Auswertestufe eingeschaltet wird, wenn die jeweilige Behälterkennung ausgewählt wird. Hiefür bedarf es keiner Lagekoordinaten. Trotzdem wird der Lagerort des ausgewählten Behälters über die Lichtanzeige in einfacher Weise erkennbar.

Die Lagerung der Behälter in den einzelnen Lagerstellen kann naturgemäß sehr unterschiedlich ausfallen. Unabhängig von der Art der Behälterlagerung ist jedoch sicherzustellen, daß die Behälter jeweils von den Mengenerfassungseinrichtungen in den Lagerstellen meßgerecht aufgenommen werden können. Zu diesem Zweck können die Lagerstellen eine Schwenkhalterung für die Behälter aufweisen, wobei die Mengenerfassungseinrichtungen aus Schwenkabstützungen für die Behälter bildenden Wiegeeinrichtungen bestehen. Nach dem Einhängen der Behälter in diese Schwenkhalterungen stützen sich die Behälter an den Wiegeeinrichtungen ab, so daß über die Wiegeeinrichtungen das Gewicht der Artikel in den einzelnen Behältern bestimmt und daraus die Vorratsmenge dieser Artikel errechnet werden kann.

Wie bereits ausgeführt wurde, ist eine Zuordnung der einzelnen Behälter zu den von ihnen aufgenommenen Artikelarten eine zwingende Voraussetzung für die Vorratserfassung. Um diese Voraussetzung in einfacher Weise auch dann erfüllen zu können, wenn die Zuordnung der Artikelarten zu den einzelnen Behältern frei wählbar sein soll, kann die Auswertestufe an wenigstens eine Eingabeeinrichtung für den einzelnen Behältern zuordbare Artikelkennungen anschließbar sein. Besonders einfache Bedienungsverhältnisse ergeben sich in diesem Zusammenhang, wenn die Eingabe der Artikelkennung im Bereich der den jeweiligen Behälter aufnehmenden Lagerstelle vorgenommen werden kann, was entweder tragbare Eingabeeinrichtungen oder Eingabeeinrichtungen im Bereich der Lagerstellen erfordert. Um im Bereich der einzelnen Lagerstellen Angaben über die jeweils gelagerten Artikel machen zu können, können die Behälter und/oder die Lagerstellen zur Aufnahme der Behälter eine über die Eingabeeinrichtung für die Artikelkennung und/oder über die Auswertestufe ansteuerbare Anzeige aufweisen, wodurch insbesondere die Lagerbenützung vereinfacht wird.

Damit Eingaben bezüglich der in einem Behälter gelagerten Artikel einfach im Bereich der Lagerstellen vorgenommen werden können, sind solche Eingaben von der Erfassung eines ordnungsgemäß gelagerten Behälters abhängig zu machen. Zu diesem Zweck können den Lagerstellen Meldeschalter für die Behälter zugeordnet werden, so daß eine wirksame Dateneingabe erst möglich wird, wenn ein Behälter mit einer entsprechenden Behälterkennung vorhanden ist und die Behälterkennung der Auswertestufe übermittelt wurde. Die Freigabe der Dateneingabe über die jeweilige Eingabeeinrichtung kann dem Bediener zusätzlich angezeigt werden, wenn z. B. die Anzeigeeinrichtung für Behälter ausgewählter Behälterkennung über die Meldeschalter ansteuerbar ist. Über diese Meldeschalter können selbstverständlich auch die den Behältern und/oder den Lagerstellen zugeordneten Anzeigen für artikelbezogene Daten, insbesondere für die Artikelkennung, ansteuerbar sein. Um nicht zusätzliche Meldeschalter vorsehen zu müssen, können vorteilhaft die aus Wiegeeinrichtungen bestehenden Mengenerfassungseinrichtungen als Meldeschalter dienen. In diesem Fall wird es lediglich erforderlich, den ausgewählten Behälter von Hand aus so zu belasten, daß eine vorgegebene Meßwertschwelle der Wiegeeinrichtung zur Signalübermittlung an die Auswertestufe überschritten wird.

### Kurze Beschreibung der Zeichnungen

In der Zeichnung ist der Erfindungsgegenstand beispielsweise dargestellt. Es zeigen
- Fig. 1: ein erfindungsgemäßes Lager ausschnittsweise in einem schematischen Vertikalschnitt,
- Fig. 2: dieses Lager in einer Vorderansicht und
- Fig. 3: ein vereinfachtes Blockschaltbild einer an die Auswerteschaltung angeschlossenen Lagerstelle mit einem Behälter für eine Artikelart.

### Bester Weg zur Ausführung der Erfindung

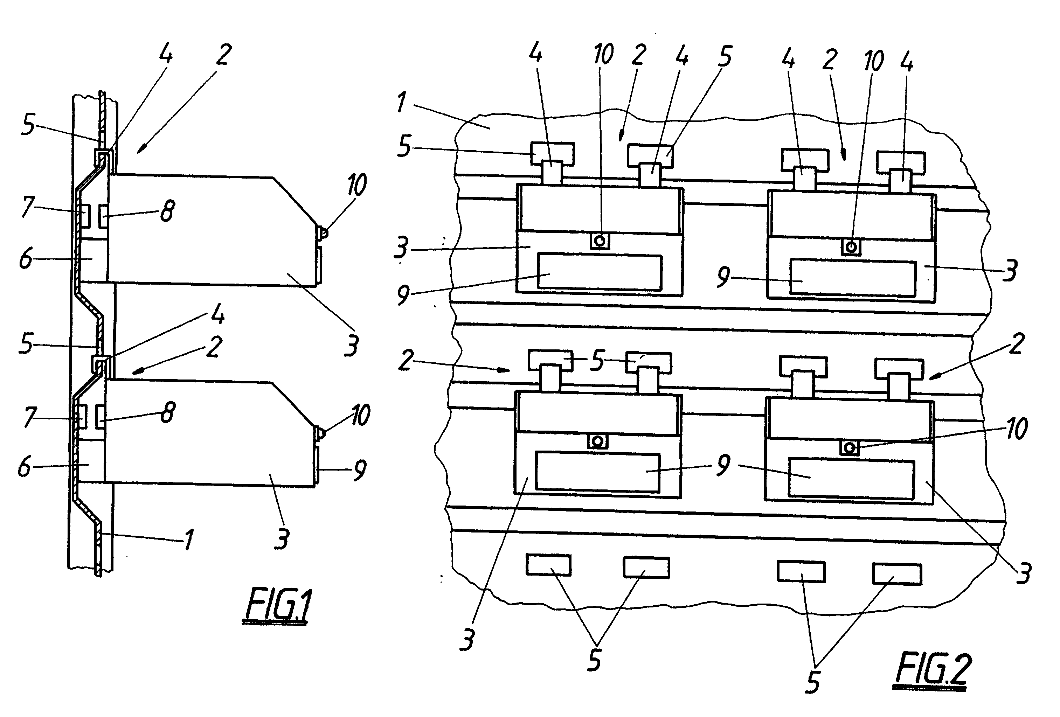

Gemäß dem Ausführungsbeispiel nach den Fig. 1 und 2 weist das Lager ein Lagergestell 1 mit einer Vielzahl von Lagerstellen 2 für Behälter 3 auf, die Einhängelaschen 4 für eine durch Einhängeschlitze gebildete Schwenkhalterung 5 des Gestells 1 tragen. Die Schwenkabstützung der Behälter 3 erfolgt über jeder Lagerstelle 2 zugeordnete Mengenerfassungseinrichtungen 6, die vorzugsweise als Wiegeeinrichtungen ausgebildet sind. Neben den Mengenerfassungseinrichtungen 6 sind den einzelnen Lagerstellen 2 Leseeinrichtungen 7 für eine an jedem Behälter 3 in einem Speicher 8 abgespeicherte Behälterkennung zugeordnet, die im einfachsten Fall aus einem Code auf einem Papierträger bestehen kann. Die Behälterkennung kann aber auch in einem Transponder abgelegt werden, wie dies an sich bekannt ist. Um für einen Lagerbenützer den Inhalt der Behälter 3 kenntlich zu machen, können die Behälter 3 selbst beispielsweise an der vorderen Stirnseite mit einer Anzeige 9 versehen sein, auf der neben der Behälterkennung entsprechende Daten über die vom Behälter 3 aufgenommene Artikelart abgelesen werden können. An der vorderen Stirnseite der Behälter 3 ist außerdem eine Anzeigeeinrichtung 10, beispielsweise eine Lichtquelle vorgesehen, um aufgrund ihrer Behälterkennung ausgewählte Behälter 3 anzeigen zu können.

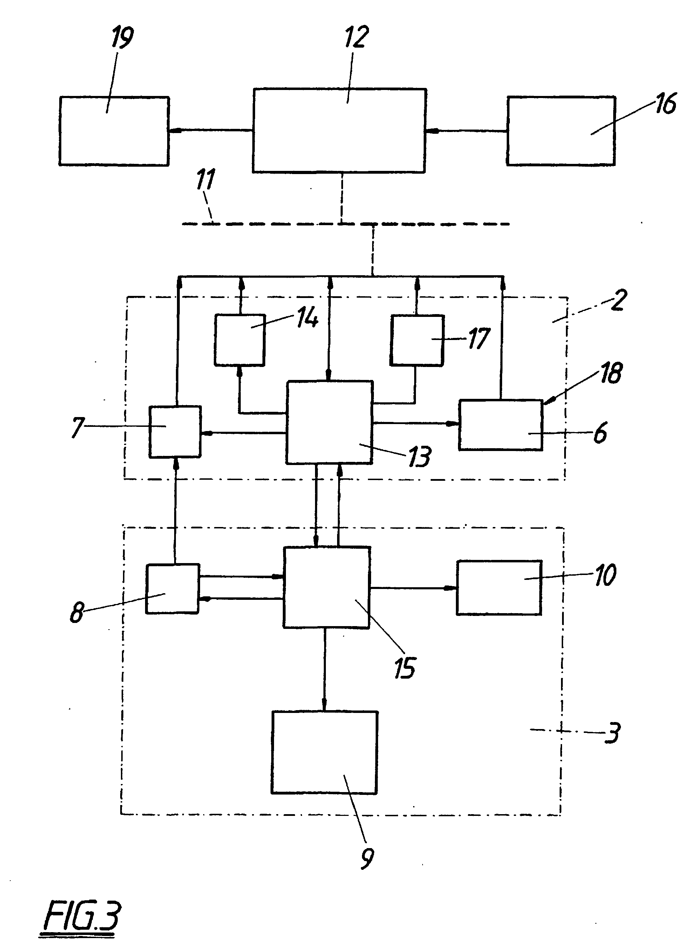

Wie dem Blockschaltbild der Fig. 3 entnommen werden kann, sind die einzelnen Lagerstellen 2 über eine Übertragungsstrecke 11 zur Daten- und Signalübertragung an eine Auswertestufe 12 angeschlossen, um aus den Meßergebnissen der den einzelnen Lagerstellen 2 zugeordneten Mengenerfassungseinrichtungen 6 die Vorratsmenge der in den Behältern 3 gelagerten Artikel je nach der Artikelart erfassen und für die Bewirtschaftung des Lagers ausnützen zu können. Zu diesem Zweck wird nach einem ordnungsgemäßen Einsetzen eines Behälters 3 in eine Lagerstelle 2 die Mengenerfassungseinrichtung 6 über eine Steuereinheit 13 angesteuert und das Meßergebnis über die Übertragungsstrecke 11 an die Auswertestufe 12 ausgelesen. Da über die Steuereinheit 13 außerdem das Auslesen der Behälterkennung des Behälters 3 aus dem Speicher 8 über die Leseeinrichtung 7 der Lagerstelle 2 gesteuert und diese Behälterkennung zusammen mit dem Meßergebnis der Mengenerfassungseinrichtung 6 der Auswertestufe 12 zugeleitet wird, kann aus dem erfaßten Gesamtgewicht des Behälters 3 und dem Einzelgewicht der der Behälterkennung zugeordneten Artikelart die Vorratsmenge der Artikel im Behälter 3 ermittelt und für die Lagerbewirtschaftung ausgenützt werden.

Die Erfassung der Behälterkennung und des Gesamtgewichtes der Behälter 3 erlaubt zwar bei einer gegebenen Zuordnung der einzelnen Behälter 3 zu bestimmten Artikelarten eine lückenlose Ermittlung der Vorratsmenge der einzelnen Artikelarten, doch fehlt für eine vorteilhafte Lagerbenützung und - bewirtschaftung die Information über die Lagerstellen 2, deren Behälter 3 eine bestimmte Behälterkennung aufweisen. Aus diesem Grunde können in einfacher Weise den Lagerstellen 2 Speicher 14 für eine Ortskennung zugeordnet werden, die über die Steuereinheit 13 ebenfalls an die Auswertestufe 12 übertragen wird, so daß mit einer in dieser Art eingerichteten Lagerstelle 2 im Zusammenwirken mit den Behältern 3 alle Voraussetzungen für ein von der Bewirtschaftung unabhänges, freies Benützen des Lagers erfüllt werden, wenn über die Auswertestufe 12 die Anzeigeeinrichtung 10 für Behälter 3 mit ausgewählter Behälterkennung angesteuert werden kann. Zu diesem Zweck ist der Anzeigeeinrichtung 10 eine Steuereinheit 15 zugeordnet, die bei einer Auswahl der Behälter 3 mit einer vorgegebenen Behälterkennung die Anzeigeeinrichtung 10 betätigt, so daß die Behälter 3 mit den ausgewählten Behälterkennungen beispielsweise durch ein Leucht- bzw. Blinksignal erkennbar werden. Zur Auswahl der Behälter einer bestimmten Behälterkennung kann die Auswertestufe 12 mit einer Eingabeeinrichtung 16 versehen sein, über die die ausgewählte Behälterkennung eingegeben wird. Eine solche Auswahl ist aber selbstverständlich auch programmbedingt möglich, beispielsweise um die Artikeleinlagerung in die Behälter 3 einfach und rasch vornehmen zu können. Die Eingabe einer Artikelkennung zu einer Behälterkennung kann aber auch über Eingabeeinrichtungen 17 vorgenommen werden, die entweder tragbar ausgebildet oder im Bereich der Lagerstellen 2 vorgesehen sind, um z. B. beim Einlagern von Artikeln in einen Behälter 3 dessen Behälterkennung die entsprechende Artikelkennung zuordnen zu können. In diesem Zusammenhang ist es für den Bediener wichtig zu erkennen, daß die notwendige Verbindung mit der übergeordneten Steuerstufe 12 hergestellt ist. Werden im Bereich der Lagerstellen 2 Meldeschalter 18 vorgesehen, über die diese Verbindung aufgebaut werden kann, so braucht der Verbindungsaufbau lediglich angezeigt zu werden, was vorteilhaft über die vorgesehene Anzeigeeinrichtung 10 erfolgen kann. Obwohl gesonderte Meldeschalter 18 durchaus möglich wären, können besonders einfache Konstruktions- und Bedienungsverhältnisse geschaffen werden, wenn die Wiegeeinrichtungen der Mengenerfassungseinrichtungen 6 als Meldeschalter 18 ausgenützt werden.

Die Auswertestufe 12 ist gemäß der Fig. 3 mit einer Anzeige 19 verbunden, über die die ermittelten Vorratsmengen und die für das Benützen bzw. Bewirtschaften des Lagers erforderlichen Daten abgelesen werden können. Die Auswertestufe 12 kann aber auch mit übergeordneten Steuereinrichtungen zusammenarbeiten, wenn das von der Auswertestufe 12 überwachte Lager beispielsweise nur einen Abschnitt einer größeren Lagereinheit darstellt. Unabhängig davon, ob die Auswertestufe 12 einer übergeordneten Steuereinheit nachgeschaltet ist oder nicht, kann ein Lagerbenützer frei über die räumliche Aufteilung der Behälter 3 auf die verfügbaren Lagerstellen 2 entscheiden, ohne die Bewirtschaftung des Lagers zu gefährden, weil mit der Erfassung sowohl der Behälterkennung als auch des Lagerortes der Behälter beispielsweise über die - Ortskennung im Zusammenhang mit der notwendigen Zuordnung von Artikelund Behälterkennungen der Bewirtschafter des Lagers stets eine vollständige Information über die Raumaufteilung erhält.

Die Erfindung ist selbstverständlich nicht auf das dargestellte Ausführungsbeispiel beschränkt. So müssen viele konstruktive Ausführungen dem einschlägigen Fachmann vorbehalten bleiben, um z. B. die jeweils günstigste Mengenerfassungseinrichtung einbauen zu können. In ähnlicher Weise kann nicht zwingend vorgeschrieben werden, wie die Behälterkennung und die Erfassung des Lageortes der Behälter 3 zu verwirklichen sind, weil es hiefür sehr unterschiedliche Möglichkeiten gibt. Entscheidend ist ja lediglich, daß die den Behältern 3 zugeordneten Behälterkennungen im Bereich der Lagerstellen 2 gelesen und mit einer Lageerfassung bzw. Lageanzeige über die Auswertestufe 12 verknüpft werden können. Gleiches kann für die Ausbildung der Anzeigeeinrichtung 10 für Behälter 3 mit ausgewählter Behälterkennung angeführt werden. Diese Anzeigeeinrichtung 10 kann nämlich nicht nur für die Erfassung des jeweiligen Lagerortes der Behälter 3, sondern auch für Zusatzmeldungen beispielsweise über den Füllstand ausgenützt werden.

## Patentansprüche

1. Lager zum Bereitstellen von Artikeln unterschiedlicher Art, bestehend aus Lagerstellen (2) für je eine Artikelart, aus den Lagerstellen (2) zugeordneten Mengenerfassungseinrichtungen (6) für die Artikel und aus einer mit den Lagerstellen (2) über eine Übertragungsstrecke (11) zur Übertragung der Meßergebnisse der Mengenerfassungseinrichtungen (6) verbundenen Auswertestufe (12) für die auf abgespeicherte Daten der jeweiligen Artikelart beziehbaren Meßergebnisse, wobei für jede Artikelart wenigstens ein von den Lagerstellen (2) aufnehmbarer Behälter (3) vorgesehen ist, und die einzelnen Behälter zu den von ihnen aufgenommenen Artikelarten zugeordnet sind, **dadurch gekennzeichnet, daß** jeder Behälter (3) einen Speicher (8) für eine Behälterkennung trägt, daß die Behälterkennung der von den Lagerstellen (2) aufgenommenen Behälter (3) über eine an die Übertragungsstrecke (11) angeschlossene Leseinrichtung (7) auslesbar ist und daß die Auswertestufe (12) mit einer Anzeigeeinrichtung (10) für Behälter (3) mit ausgewählter Behälterkennung in Verbindung steht.

2. Lager nach Anspruch 1, **dadurch gekennzeichnet, daß** die Anzeigeeinrichtung (10) für Behälter (3) mit ausgewählter Behälterkennung aus einer Lichtquelle am Behälter (3) besteht.

3. Lager nach Anspruch 1 oder 2, **dadurch gekennzeichnet, daß** die Lagerstellen (2) eine Schwenkhalterung (5) für die Behälter (3) aufweisen und daß die Mengenerfassungseinrichtungen (6) aus Schwenkabstützungen für die Behälter (3) bildenden Wiegeeinrichtungen bestehen.

4. Lager nach einem der Ansprüche 1 bis 3, **dadurch gekennzeichnet, daß** die Auswertestufe (12) an wenigstens eine Eingabeeinrichtung (16, 17) für den einzelnen Behältern (3) zuordbare Artikelkennungen anschließbar ist.

5. Lager nach einem der Ansprüche 1 bis 4, **dadurch gekennzeichnet, daß** den Lagerstellen (2) Meldeschalter (18) für die Behälter (3) zugeordnet sind.

6. Lager nach einem der Ansprüche 1 bis 5, **dadurch gekennzeichnet, daß** die Anzeigeeinrichtung (10) für Behälter (3) ausgewählter Behälterkennung über die Meldeschalter (18) ansteuerbar ist.

7. Lager nach Anspruch 6, **dadurch gekennzeichnet, daß** die aus Wiegeeinrichtungen bestehenden Mengenerfassungseinrichtungen (6) als Meldeschalter (18) ausgebildet sind.

8. Lager nach Anspruch 6 oder 7, **dadurch gekennzeichnet, daß** die Behälter (3) und/oder die Lagerstellen (2) zur Aufnahme der Behälter (3) eine über die Leseeinrichtung (7) für die Behälterkennung, über die Auswertestufe (12) und/oder die Meldeschalter (18) ansteuerbare Anzeige (9) aufweisen.

## Claims

1. A store for presenting articles of various kinds, consisting of storage locations (2) each for one type of article, quantity detection devices (6) for the articles, said devices being associated with the storage locations, and of an evaluation stage (12) connected to the storage locations (2) via a transmission link (11) for transmitting the measurements from the quantity detection devices (6), said evaluation stage (12) being intended for the measurements which can be related to stored data relating to the respective type of article, wherein at least one container (3) adapted to be received by the storage locations (2) is provided for each type of article and the individual containers are associated with the types of article received by them, **characterised in that** each container (3) contains a memory (8) for container identification, **in that** the container identification of the containers (3) received by the storage locations (2) is adapted to be read out by means of a reading device (7) connected to the transmission link (11) and **in that** the evaluation stage (12) is connected to an indicator device (10) for containers (3) with selected container identification.

2. A store according to claim 1, **characterised in that** the indicator device (10) for containers (3) with selected container identification consists of a light source on the container (3).

3. A store according to claim 1 or 2, **characterised in that** the storage locations (2) comprise a pivoting mount (5) for the containers (3) and **in that** the quantity detection devices (6) consist of weighing devices which form pivoting supports for the containers (3).

4. A store according to any one of claims 1 to 3, **characterised in that** the evaluation stage (12) is adapted to be connected to at least one inputting device (16, 17) for article identifications associated with the individual containers (3).

5. A store according to any one of claims 1 to 4, **characterised in that** messaging switches (18) for the containers (3) are associated with the storage locations (2).

6. A store according to any one of claims 1 to 5, **characterised in that** the indicator device (10) for containers (3) with selected container identification is adapted to be actuated via the messaging switches (18).

7. A store according to claim 6, **characterised in that** the quantity detection devices (6) consisting of weighing devices are constructed as messaging switches (18).

8. A store according to claim 6 or 7, **characterised in that** the containers (3) and/or the storage locations (2) for the reception of the containers (3) comprise a display (9) which is adapted to be actuated via the reading device (7) for the container identification, via the evaluation stage (12) and/or via the messaging switches (18).

## Revendications

1. Dispositif de stockage pour mettre à disposition différents types d'articles, composé de postes de stockage (2), chacun pour un type d'article, de dispositifs de détection de quantité (6) associés aux postes de stockage (2), pour les articles, et d'un étage d'évaluation (12), relié aux postes de stockage (2) par une voie de transmission (11) pour transmettre les résultats de mesure des dispositifs de détection de quantité (6), étage d'évaluation des résultats de mesure pouvant se référer aux données mémorisées du type d'article respectif, où pour chaque type d'article est prévu au moins un récipient (3) susceptible d'être logé par les postes de stockage (2), et les différents récipients étant associés aux types d'article logé par eux, en ce que chaque récipient porte une mémoire stockage (8) pour l'identification de récipients, en ce que l'identification du récipient (3) logé par les postes de stockage (2) peut être lue par un dispositif lecteur (7) raccordé à la voie de transmission (11), et en ce que l'étage d'évaluation (12) est relié à un dispositif d'affichage (10) pour les récipients (3), avec une identification de récipient sélectionnée.

2. Dispositif de stockage selon la revendication 1, **caractérisé en ce que** le dispositif d'affichage (10) des récipients (3) ayant une identification de récipient sélectionnée est formé d'une source lumineuse prévue sur le récipient (3).

3. Dispositif de stockage selon la revendication 1 ou 2, **caractérisé en ce que** les postes de stockage (2) présentent une fixation pivotante (5) pour les récipients (3), et **en ce que** les dispositifs de détection de quantité (6) sont formés de dispositifs peseurs, formant des appuis pivotants pour les récipients (3).

4. Dispositif de stockage selon l'une des revendications 1 à 3, **caractérisé en ce que** l'étage d'évaluation (12) est susceptible d'être raccordé à au moins un dispositif d'introduction (16, 17) pour des identifications d'articles pouvant être associées aux différents récipients (3).

5. Dispositif de stockage selon l'une des revendications 1 à 4, **caractérisé en ce que** des interrupteurs d'avertissement (18) pour les récipients (3) sont associés aux postes de stockage (2).

6. Dispositif de stockage selon l'une des revendications 1 à 5, **caractérisé en ce que** le dispositif d'affichage (10) pour des récipients (3) à identification de récipient sélectionnée peut être commandé par l'intermédiaire des interrupteurs d'avertissement (18).

7. Dispositif de stockage selon la revendication 6, **caractérisé en ce que** les dispositifs de détection de quantité (6) formés de dispositifs peseurs sont réalisés sous la forme d'interrupteur d'avertissement (18).

8. Dispositif de stockage selon la revendication 6 ou 7, **caractérisé en ce que** les récipients (3) et/ou les postes de stockage (2) devant recevoir les récipients (3) présentent un affichage (9), pouvant être commandé par l'intermédiaire du dispositif lecteur (7) devant assurer l'identification des récipients, par l'intermédiaire de l'étage d'évaluation (12) et/ou des interrupteurs avertisseurs (18).
